# EUROPÄISCHE PATENTSCHRIFT

(11) **EP 2 462 295 B1**
(45) Veröffentlichungstag und Bekanntmachung des Hinweises auf die Patenterteilung: **16.09.2015**
(21) Anmeldenummer: 10747582.4
(22) Anmeldetag: 09.08.2010
(51) Int. Cl.: E04F 13/08, E04F 15/02, F24D 3/16

(54) **PANEEL MIT MINDESTENS EINER NUT**
PANEL COMPRISING AT LEAST ONE GROOVE
PANNEAU COMPORTANT AU MOINS UNE RAINURE

(30) Priorität: 07.08.2009 DE 102009036538
(43) Veröffentlichungstag der Anmeldung: 13.06.2012
(73) Patentinhaber: RESOPAL GMBH, 64823 Gross-Umstadt (DE)
(72) Erfinder: TOLKSDORF, Hans-Helmut, 32791 Lage / Lippe (DE); DEMMER, Markus, 48346 Ostbevern (DE)
(74) Vertreter: Mai, Dörr, Besier
(86) Internationale Anmeldenummer: PCT/EP2010/004848
(87) Internationale Veröffentlichungsnummer: WO 2011/015375

(56) Entgegenhaltungen:
- WO-A1-2006/108446
- WO-A2-2010/023252
- DE-A1- 3 720 554
- DE-U1- 8 604 531
- DE-U1- 29 918 445

## Beschreibung

Die vorliegende Erfindung betrifft ein Paneel mit mindestens einer Nut auf der Unterseite. Vorzugsweise handelt es sich bei dem Paneel um eine Bodenplatte (Fußbodenpaneel). Ferner kann das Paneel aber auch eine andere Platte, wie zum Beispiel eine Tischplatte, oder ein Wandpaneel sein, auch wenn diese Anwendungsgebiete weniger im Vordergrund stehen.

Paneele, insbesondere Fußbodenpaneele, werden nach bestimmten Mustern zusammengesetzt und dienen als Belag, insbesondere als Bodenbelag, für Innenräume, z. B. als Parkett. Sie sind in der Regel aus Holz, insbesondere aus Hartholz von Laubbäumen, gefertigt und wirken aufgrund der hygroskopischen Eigenschaften des Holzes raumregulierend. Darüber hinaus sind die entsprechenden Beläge durch ihre geschlossene Form sehr hygienisch.

Weiterhin sind auch Paneele, umfassend einen Träger und eine mehrschichtige Verbundplatte (auch Schichtstoffplatte oder Laminat genannt) bekannt. Die Verbundplatte besteht gewöhnlich aus einer bestimmten Anzahl unterschiedlicher Papierbögen, die mit härtbaren Kunstharzen imprägniert, übereinander geschichtet und unter Hitze und hohem Druck mittels Pressplatten (oft auch als Pressbleche bezeichnet) miteinander verpresst werden. Als Kern dieser Verbundplatte dient üblicherweise eine Anordnung aus mehreren Bögen Kraftpapier, auf der in der Regel ein Bogen eines mit Mustern oder Farben versehenen Dekorpapiers angeordnet ist. Auf dem Dekorpapierbogen kann schließlich ein üblicherweise transparentes Overlay angebracht sein. Derart hergestellte mehrschichtige Verbundplatten (high pressure laminates, HPLs) werden zum Beispiel unter dem Handelsnamen Resopal vertrieben.

Insbesondere bei Nutzung der Paneele als permanente Tritt- und Stellfläche sind die Verbundplatten hohen mechanischen Beanspruchungen ausgesetzt. Sie müssen daher eine hohe Widerstandsfähigkeit gegenüber mechanischer Beanspruchung, insbesondere eine hohe Abriebfestigkeit, aufweisen in der europäischen Norm 13329, Anhang E, wird ein Test zur Bestimmung der Abriebfestigkeit von Laminatböden und die Einordnung der getesteten Laminatböden in Abriebklassen von AC1 (moderat abriebfest bei häuslicher Beanspruchung) bis AC6 (hoch abriebfest im gewerblichen Bereich) festgelegt.

Eine hohe Abriebfestigkeit von Oberflächen von Verbundplatten bzw. diese Verbundplatten aufweisenden Laminatböden wird vor allem dadurch erreicht, dass in die Verbundplatten Korundpartikel eingearbeitet werden, die von Natur aus durch eine hohe Härte gekennzeichnet sind. Die Abriebfestigkeit kann insbesondere durch die Größe und die Menge der verwendeten Korundpartikel gesteuert werden.

Beispielsweise offenbart WO 2009/080171 ein Paneel, das einen Träger und eine auf dem Träger haftende erfindungsgemäße Verbundplatte umfasst. Die Verbundplatte umfasst wiederum
a) eine Kernschicht,
b) eine Dekorschicht,
c) Partikel mit einer Mohs-Härte von wenigstens 8,
d) eine Bindemittelanordnung, in der die Kernschicht und die Dekorschicht vorgesehen sind und die eine auf der Dekorschicht angeordnete Bindemittelschicht bildet, die die Partikel enthält,
wobei
(i) die durch die Bindemittelschicht gebildete Oberfläche der Verbundplatte eine Glanzgradreduktion nach Scheuerbeanspruchung im Glanzgradreduktionstest GR500 von höchstens 7% aufweist, wobei der ursprüngliche Glanzgrad wenigstens 80 GE beträgt,
(ii) die Partikel eine mittlere Korngröße im Bereich von 5 - 100 µm aufweisen,
   und
(iii) die Beladung der Verbundplatte mit den Partikeln, bezogen auf die Oberfläche der Verbundplatte, im Bereich von 21 - 35 g/m² liegt.

Bevorzugte Träger sind Spanplatten, Sperrholz, Trägerplatten (gegebenenfalls mit Schichtstoff beschichtet), hochverdichtete Faserplatten, mitteldichte Faserplatten, Hartfaserplatten, Tischlerplatten, Furnierplatten, Massivholz, Waben, Schaumstoffe, Metallplatten, Bleche, mineralische Träger, Natur- und Kunststein, Fliesen und Gipskartonplatten. Die Träger können mit einem geeigneten Bindemittel, wie z. B. einem Melaminharz, beschichtet oder unbeschichtet sein. Die Verbundplatte kann sowohl auf flüssigkeitsaufnehmende (saugfähige) Träger, wie z. B. unbeschichtete Spanplatten und unbeschichtetes Holz, als auch auf nicht flüssigkeitsaufnehmende (nicht saugfähige) Träger, wie z. B. Metalle, Keramik, Glas, beschichtete Hölzer, beschichtete Spanplatten usw. aufgebracht werden.

Ein Nachteil herkömmlicher Paneele ist jedoch ihre große Wasserempfindlichkeit. So quellen insbesondere Holzmaterialien, wie z. B. Spanplatten, die in vielen Paneelen als Träger verwendet werden, um 8 % und mehr auf, mit der Folge, dass die entsprechenden Paneele nicht wasserbeständig sind.

Weiterhin sind sie relativ schwer.

Ähnliches gilt auch für die ansonsten für feste Beläge eingesetzten hochdichten Faserplatten (auch HDF genannt), die ebenfalls nur bedingt wasserfest sind. Darüber hinaus weisen sie eine sehr hohe Dichte, üblicherweise im Bereich von 850 bis 950 kg/m³, auf und sind deshalb noch schwerer und teurer als herkömmliche Paneele, umfassend einen Spanplattenträger.

Wood-Plastic-Composites, wie z. B. PE- oder PP-Composites, können zwar eine bessere Wasserbeständigkeit und ein geringeres Gewicht aufweisen. Jedoch sind ihre mechanischen Eigenschaften, insbesondere ihre Festigkeit und die Abhebefestigkeit der Beschichtung, sowie ihre Bearbeitbarkeit, insbesondere für Fräsen, in der Regel deutlich schlechter.

Gerade für die Anwendung sind jedoch Paneele mit guter Bearbeitbarkeit, insbesondere für Fräsen, wünschenswert, die mindestens der von Holzwerkstoffen entspricht und insbesondere das Einarbeiten von Klick-Systemen entlang der Kanten der Paneele erlauben. Gleichzeitig werden möglichst gute mechanische Eigenschaften, insbesondere eine hohe Festigkeit und eine gute Abhebefestigkeit gewünscht.

Ein weiteres Problem bei herkömmlichen Belägen, die aus Paneelen zusammengesetzt sind, ist die Verlegung von Kabeln, wie z. B. Stromkabeln, Telefonkabeln, Fernsehkabeln, und anderen Leitungen oder Rohren, die in der Regel für den Betrachter möglichst unsichtbar erfolgen soll, um den optischen Gesamteindruck des Raumes nicht zu beeinträchtigen.

Kabel, Rohre und andere Leitungen, die aufgrund der Position des Empfängers nicht unter der Wand oder in der Decke, sondern am Boden verlegt werden, müssen entweder vor der Zusammensetzung der Paneele aufwendig unter dem Fußbodenbelag angeordnet oder nachträglich auf dem Fußbodenbelag für den Betrachter sichtbar verlegt werden.

Eine Anordnung der Kabel, Rohre oder anderen Leitungen in Fugen zwischen einzelnen Paneelen ist in der Regel nicht möglich, da diese in der Regel auf Verbund verlegt werden, um eine hinreichende Stabilität des Belags zu gewährleisten.

DE 299 18 445 U1 offenbart eine Verbundbauplatte für eine mit einer Installationsleitung versehenen Wandung. Zu diesem Zweck umfasst die Verbundplatte einen Kanal zum Einschieben der Installationsleitung. Die Einzelbauplatten sind z. B. Betonplatten oder Spanplatten, besonders bevorzugt Gipsplatten oder Gipsfaserplatten. Die Einzelplatten werden seitlich gegeneinander versetzt oder fluchtend verlegt. Der Kanal soll beispielsweise völlig geradlinig oder auch gebogen oder gewinkelt verlaufen. Eine besonders bevorzugte Ausführungsform sieht vor, dass über die Länge und über die Breite der Verbundbauplatte jeweils mindestens zwei Kanäle in einer vorgegebenen Richtung verlaufen. Aussparungen zum Einsetzen eines Schaltmittels werden ebenfalls vorgeschlagen.

DE 86 04 531 U1 beschreibt eine Formplatte für eine Bodenkonstruktion mit einem Kabelkanal. Dabei soll die Einarbeitung des Kanals in die Formplatte ohne Schwierigkeiten möglich sein, wenn die Formplatte aus einem Schaumstoff mit hoher Druckfestigkeit, beispielsweise aus Polystyrol, besteht. Senkrechte Bohrungen in den Kabelkanal werden auch erwähnt. Die beiliegende Figur zeigt zwei, nebeneinander liegende, parallel zur Kante verlaufende Kabelkanäle.

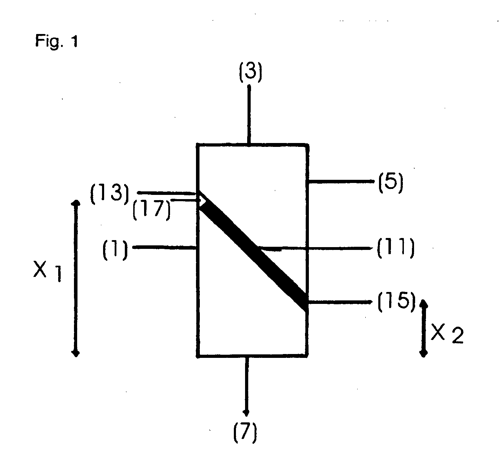

DE 159 996 A offenbart eine Einrichtung zur Lüftung von Holzfußböden, wofür unter den Fußbodenbrettern mit der Außenluft in Verbindung tretende Kanäle angeordnet werden. Die Querschnittsabbildung Fig. 1 zeigt mehrere, nebeneinander liegende, parallel zur Kante verlaufende Kanäle.

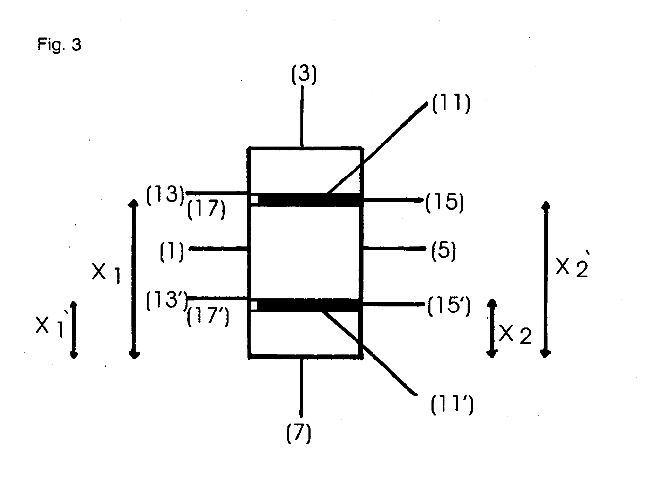

AT 328 161 B betrifft ein Fertigparkettelement, das aus einer rechteckigen oder quadratischen, aus an ihren Stoßfugen miteinander verleimten Holzleisten zusammengesetzten einschichtigen Platte und ggf. einer mit der Platte verleimten Unterlage besteht und mit Nut und Feder versehen ist. Dabei ist die Platte zu ihrer flexiblen Gestaltung auf der Verlegeseite mit zu den Holzleisten längs und/oder quer oder schräg verlaufenden, mindestens bis zur Plattenmitte reichenden Rillen versehen. Durchgehende, diagonal verlaufende Rillen werden in Fig. 3 gezeigt. Als Unterlage wird eine Schaumstoffplatte vorgeschlagen.

CH 91 482 A beschreibt eine Einrichtung an Bodenbelagkörpern zum Festhalten derselben auf der mit Klebmasse bestrichenen Unterlage, bei welcher die auf die Unterlage aufzuliegen kommende Seite der Bodenbelagskörper Rillen aufweist, die ggf. versetzt zueinander angeordnet sind und vorzugsweise parallel zueinander verlaufen. Fig. 3 zeigt mehrere, nebeneinander liegende, diagonal verlaufende Rillen.

DE 103 30 138 B3 offenbart eine Vorrichtung zum Halten von temperierbaren Elementen, insbesondere Rohren, mit einem Plattenkörper, der geschäumtes Metall aufweist und der auf der Oberseite mindestens eine Rille zur Aufnahme eines temperierbaren Elements umfasst. Fig. 1 zeigt mehrere, nebeneinander liegende, diagonal verlaufende Rillen. An der Unterseite des Plattenkörpers kann ggf. eine Trittschalldämmschicht, vorzugsweise aus Polyolefinschicht oder Polymermaterial, insbesondere aus Schaumstoff, angeordnet sein.

DE 10054880 A1 betrifft eine modulare Vertegeplatte aus thermoisolierendem Material, umfassend eine rasterartige Kanalanordnung. Fig. 1 zeigt mehrere, nebeneinander liegende, diagonal verlaufende Kanäle. Bevorzugt ist die Verlegeplatte aus einem Hartschaum, wie Polyurethan- oder Polystyrolhartschaum, hergestellt.

Ein Nachteil der vorstehend genannten Verlegesysteme ist jedoch darin zu sehen, dass bei ihnen die einzelnen Elemente entweder nicht miteinander verbunden werden, oder fest miteinander verklebt werden. Im ersten Fall können die einzelnen Elemente, insbesondere bei starker mechanischer Beanspruchung verrutschen. Im zweiten Fall ist ein Lösen der Verbindung zwischen den einzelnen Elementen bei Bedarf nur schwer, falls überhaupt, möglich. Aus Anwendungssicht sind jedoch Systeme wünschenswert, bei welchen die einzelnen Elemente einerseits fest miteinander verbunden werden können, um ein Verrutschen der Elemente, insbesondere bei mechanischer Beanspruchung, bestmöglich vermeiden zu können. Andererseits sollte diese Verbindung bei Bedarf auf möglichst einfache Art und Weise wieder gelöst werden können.

WO 2006/108446 offenbart einen Fußbodenbelag aus Fußbodenpaneelen mit einem plattenförmigen Kern und einer oberen Deckschicht, mit mechanischen Verriegelungsmitteln wenigstens an zwei einander gegenüberliegenden Kanten der Fußbodenpaneele, wobei der Kern aus einem mineralischen Material besteht.

In Anbetracht des Standes der Technik war es daher Aufgabe der vorliegenden Erfindung, die Nachteile des Standes der Technik zu beheben und insbesondere bessere Möglichkeiten zur Verlegung von Kabeln, Leitungen und Rohren bei Belägen aufzuzeigen, die aus mehreren Paneelen zusammengesetzt sind. Dabei sollten die Kabel, Leitungen und Rohre für den Betrachter möglichst unsichtbar angeordnet werden können, um den optischen Gesamteindruck des Raumes nicht zu beeinträchtigen. Darüber hinaus sollte ein unsichtbares Verlegen der Kabel, Leitungen und Rohre nach dem Zusammensetzen der Paneele und/oder die Änderung des Verlaufs der Kabel, Leitungen und/oder Rohre auf möglichst einfache Art und Weise möglich sein.

Darüber hinaus sollte sowohl ein mögliches Verrutschen der einzelnen Paneele, insbesondere bei mechanischer Beanspruchung, bestmöglich vermieden, als auch ein Ablösen der Paneele auf möglichst einfache Art und Weise gewährleistet werden.

Weiterhin sollte insbesondere die Wasserbeständigkeit herkömmlicher Paneele verbessert werden. Gleichzeitig wurden Paneele mit einem möglichst geringen Gewicht und möglichst guten mechanischen Eigenschaften, insbesondere einer möglichst hohen Festigkeit und einer möglichst guten Abhebefestigkeit, sowie einer exzellenten Bearbeitbarkeit, insbesondere für das Fräsen, gewünscht. Schließlich wurde eine möglichst einfache und möglichst kostengünstige Ausführungsform angestrebt.

Gelöst werden diese sowie weitere Aufgaben, die sich aus den zuvor diskutierten Zusammenhängen inhärent ergeben, durch ein Paneel, insbesondere ein Fußbodenpaneel, mit allen Merkmalen des vorliegenden Anspruchs 1. Bevorzugte Abwandlungen des Paneels werden in den rückbezogenen Unteransprüchen beschrieben. Die weiteren Ansprüche stellen bevorzugte Anwendungsgebiete des erfindungsgemäßen Paneels unter Schutz.

Durch die Bereitstellung eines rechteckigförmigen Paneels mit einer Oberseite und einer Unterseite sowie vier Längsseiten (1, 3, 5, 7), wobei
- die erste und die zweite Längsseite (1, 3) im rechten Winkel zueinander angeordnet sind,
- die erste und die dritte Längsseite (1, 5) parallel zueinander angeordnet sind
   und
- die zweite und die vierte Längsseite (3, 7) parallel zueinander angeordnet sind,
- das Paneel auf der Unterseite mindestens eine Nut (11) aufweist, die von der ersten Längsseite (1) nach der dritten Längsseite (5) verläuft und eine erste Nutöffnung (13) in der ersten Längsseite (1) und eine zweite Nutöffnung (15) in der dritten Längsseite (5) aufweist,
- das Paneel mindestens eine Nutöffnung (15) in der dritten Längsseite (5) aufweist, deren Abstand (X₂) von der vierten Längsseite (7) verschieden ist von dem Abstand (X₁) mindestens einer Nutöffnung (13) in der ersten Längsseite (1) von der vierten Längsseite (7),
so dass
zwei identische Paneele (A, B) über die dritte Längsseite (5) des ersten Paneels (A) und die erste Längsseite (1 b) des zweiten Paneels (B) parallel versetzt miteinander verbunden werden können und dabei auf der Unterseite der Paneele (A, B) mindestens eine durchgehende Nut (11, 11b) aufweisen, die von der ersten Längsseite (1) des ersten Paneels (A) nach der dritten Längsseite (5b) des zweiten Paneels (B) verläuft, wobei mindestens eine Längsseite (1, 3, 5, 7) des Paneels ein Klick-System aufweist, um das Paneel mit einem weiteren Paneel formschlüssig zu verbinden,
wobei das Paneel einen Polyurethan-Schaumstoff-Träger und mindestens eine auf dem Träger haftende mehrschichtige Verbundplatte umfasst, wobei die mehrschichtige Verbundplatte
a) eine Kernschicht und
b) eine Dekorschicht umfasst,
gelingt es auf nicht naheliegende Art und Weise, eine bessere Möglichkeit zur Verlegung von Kabeln, Rohren und anderen Leitungen bei Belägen aufzuzeigen, die aus mehreren Paneelen zusammengesetzt sind. Dabei können die Kabel, Rohre und/oder anderen Leitungen für den Betrachter auf einfache Art und Weise, weitgehend unsichtbar angeordnet werden, ohne den optischen Gesamteindruck des Raumes zu beeinträchtigen. Darüber hinaus ist auch ein unsichtbares Verlegen der Kabel, Rohre und/oder anderen Leitungen nach dem Zusammensetzen der Paneele und/oder die Änderung des Verlaufs der Kabel, Rohre und/oder anderen Leitungen auf relativ einfache Art und Weise möglich.

Ein mögliches Verrutschen der einzelnen Paneele, insbesondere bei mechanischer Beanspruchung, wird durch die formschlüssige Verbindung der einzelnen Paneele bestmöglich vermieden. Gleichzeitig Ist die Verbindung zwischen den einzelnen Paneelen auf einfache Art und Weise wieder lösbar.

Durch die Verwendung eines Schaumstoff-Paneels, umfassend einen Schaumstoff-Träger und mindestens eine auf dem Träger haftende mehrschichtige Verbundplatte, wobei die mehrschichtige Verbundplatte
a) eine Kernschicht und
b) eine Dekorschicht umfasst,
gelingt es weiterhin auf nicht naheliegende Art und Weise, ein Paneel für Beläge zugänglich zu machen, welches eine signifikant verbesserte Wasserbeständigkeit aufweist.

Weiterhin zeichnet es sich durch ein vergleichsweise geringes Gewicht aus, da die Dichte des verwendeten Trägermaterials deutlich kleiner als die von den üblicherweise eingesetzten Materialien, wie Spanplatten (700-800 kg/m³) und HDF (850-950 kg/m³), ist.

Zusätzlich weist das Paneel hervorragende Materialeigenschaften, insbesondere sehr gute mechanische Eigenschaften, wie eine hohe Festigkeit und eine sehr gute Abhebefestigkeit, sowie eine exzellente Bearbeitbarkeit, insbesondere für Fräsen, auf.

Schließlich kann die Herstellung des erfindungsgemäßen Paneels auf einfache Art und Weise kostengünstig erfolgen. Dabei ist das Einbringen von Klick-Systemen entlang den Kanten des Paneels ohne Probleme möglich.

Im Folgenden wird die Erfindung unter gelegentlicher Bezugnahme auf die beigefügten Figuren näher erläutert, ohne dass hierdurch eine Beschränkung des Erfindungsgedankens erfolgen soll.

Es zeigen:
Fig. 1 eine Ansicht der Unterseite eines erfindungsgemäßen Paneels gemäß einer ersten bevorzugten Ausführungsform der Erfindung,
Fig. 2 eine Ansicht der Unterseite von zwei versetzt verbundenen Paneelen gemäß dieser ersten bevorzugten Ausführungsform der Erfindung,
Fig. 3 eine Ansicht der Unterseite eines erfindungsgemäßen Paneels gemäß einer zweiten bevorzugten Ausführungsform der Erfindung,
Fig. 4 eine Ansicht der Unterseite von zwei versetzt verbundenen Paneelen gemäß dieser zweiten bevorzugten Ausführungsform der Erfindung.

In den Abbildungen werden folgende Bezugszeichen verwendet:
- (1): erste Längsseite
- (3): zweite Längsseite
- (5): dritte Längsseite
- (7): vierte Längsseite
- (11): Nut
- (13): Nutöffnung in der ersten Längsseite (1)
- (15): Nutöffnung in der ersten Längsseite (5)
- (17): Öffnung
- (X1): Abstand der Nutöffnung (13) in der ersten Längsseite (1) von der vierten Längsseite (7)
- (X2): Abstand der Nutöffnung (15) in der ersten Längsseite (5) von der vierten Längsseite (7)

In Abbildungen mit zwei Paneelen bezeichnet A das erste und B das zweite Paneel.

Sind die betreffenden Merkmale bei mehr als einem dargestellten Paneel gleichzeitig verwirklicht, so werden die gleichen Bezugszeichen verwendet, wobei die Merkmale der zweiten Paneele mit dem Index b gekennzeichnet werden.

Sind die betreffenden Merkmale bei einer dargestellten Paneele mehrfach verwirklicht, so werden die gleichen Bezugszeichen verwendet, wobei die sich wiederholenden Merkmale mit' gekennzeichnet werden.

Die Bezugszeichen der entsprechenden Merkmale in den Zeichnungen werden in der folgenden Beschreibung in Klammern erwähnt, um das Verständnis der Erfindung zu erleichtern. Hierdurch soll der Erfindungsgedanke jedoch nicht auf die konkret dargestellte Ausführungsform beschränkt werden.

Die vorliegende Erfindung betrifft ein rechteckigförmiges Paneel, d. h. ein Paneel mit der Form eines Quaders mit einer rechteckigen Grundfläche. Der Begriff "rechteckförmig" schließt in diesem Zusammenhang Paneele mit quadratischer Form, insbesondere Quader, mit ein.

Das erfindungsgemäße Paneel umfasst eine Oberseite und eine Unterseite sowie vier Längsseiten (1, 3, 5, 7), wobei
- die erste und die zweite Längsseite (1, 3) im rechten Winkel zueinander angeordnet sind,
- die erste und die dritte Längsseite (1, 5) parallel zueinander angeordnet sind
   und
- die zweite und die vierte Längsseite (3, 7) parallel zueinander angeordnet sind.

Hieraus ergibt sich zwangsläufig, dass
- die zweite und die dritte Längsseite (3, 5) im rechten Winkel zueinander angeordnet sind,
- die dritte und die vierte Längsseite (5, 7) im rechten Winkel zueinander angeordnet sind,
- die vierte und die erste Längsseite (7, 1) im rechten Winkel zueinander angeordnet sind.

Die erste und die dritte Längsseite (1, 5) sind vorzugsweise länger als die zweite und die vierte Längsseite (3, 7).

Im Rahmen der vorliegenden Erfindung weist das Paneel auf der Unterseite mindestens eine, vorzugsweise eine bis 5, insbesondere 1 oder 2, Nut(en) (11) auf, die von der ersten Längsseite (1) nach der dritten Längsseite (5) verläuft.

Die Form der Nut ist dabei von untergeordneter Bedeutung, bevorzugt werden jedoch geradlinig verlaufende Nuten, wie in den beiliegenden Figuren dargestellt.

Auch die Anzahl der Nuten unterliegt keinen besonderen Beschränkungen. Es kann beispielsweise nur eine Nut pro Paneel vorgesehen sein, sofern sie die übrigen Erfordernisse der Erfindung erfüllt (siehe Fig. 1). Es können aber auch zwei oder mehr Nuten vorliegen, die jeweils einzeln oder in Summe die übrigen Merkmale der Erfindung aufweisen (siehe Fig. 3).

Sofern zwei oder mehr Nuten vorliegen, weisen diese vorzugsweise einen Anstand zueinander auf, der größer als die maximale Breite der breiteren Nut ist.

Auch die sonstige Gestalt der Nut kann prinzipiell frei gewählt und auf die konkrete Anwendung abgestimmt werden.

Zweckmäßigerweise weist die Nut (11) jedoch eine Breite im Bereich von 0,1 bis 2,0 cm, insbesondere im Bereich von 0,5 bis 1,5 cm, auf.

Die Tiefe der Nut (11) liegt vorzugsweise im Bereich von 10 bis 75 %, insbesondere im Bereich von 25 bis 60%, der Gesamtdicke des Paneels.

Sofern die Nut eine variierende Breite oder Tiefe aufweist, beziehen sich die vorstehenden Angaben auf die entsprechenden arithmetischen Mittelwerte. Nuten mit konstanter Breite und Tiefe werden aber im Rahmen der vorliegenden Erfindung ganz besonders bevorzugt.

Wesentlich für die vorliegende Erfindung ist weiterhin, dass das Paneel mindestens eine erste Nutöffnung (13) in der ersten Längsseite (1) und mindestens eine zweite Nutöffnung (15) in der dritten Längsseite (5) aufweist, wobei der Abstand (X₂) mindestens einer Nutöffnung (15) in der dritten Längsseite (5) von der vierten Längsseite (7) verschieden ist von dem Abstand (X₁) mindestens einer Nutöffnung (13) in der ersten Längsseite (1) von der vierten Längsseite (7).

Hierbei kann es sich um Nutöffnungen handeln, die zu einer gemeinsamen Nut gehören (siehe Fig. 1). Denkbar ist aber auch das die Nutöffnungen nicht zu derselben Nut, sondern zu verschiedenen Nuten gehören (siehe Fig. 3).

Bei der Ermittlung der genannten Abstände wird vorzugsweise auf die Entfernung zum Mittelpunkt der Öffnung abgestellt.

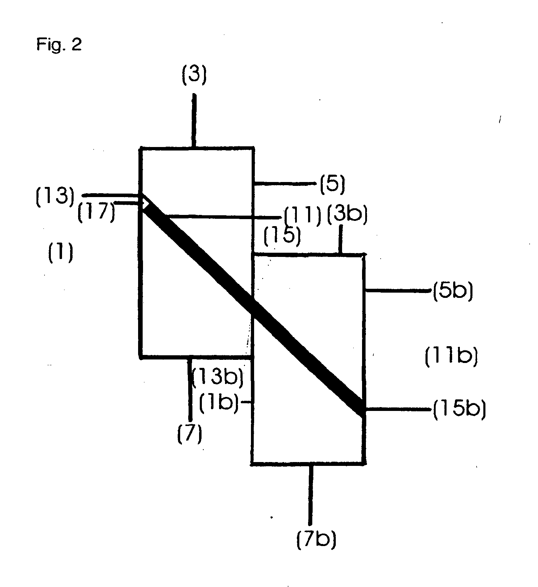

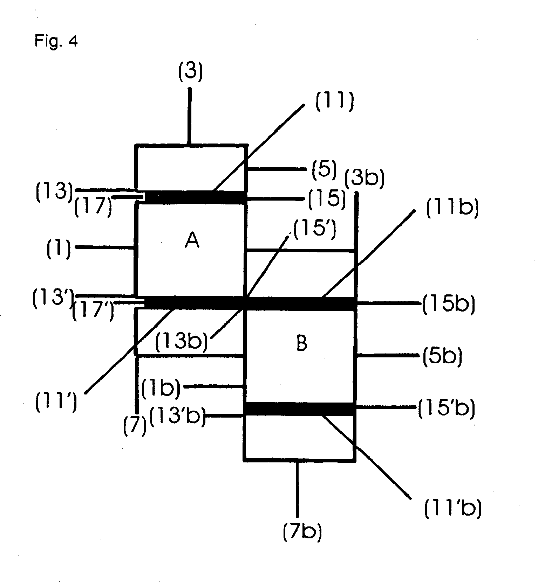

Die erfindungsgemäße Anordnung der Nutöffnungen führt dazu, dass zwei identische Paneele (A, B) über die dritte Längsseite (5) des ersten Paneels (A) und die erste Längsseite (1 b) des zweiten Paneels (B) parallel versetzt miteinander verbunden werden können und dabei auf der Unterseite der Paneele (A, B) mindestens eine durchgehende Nut (11, 11 b) aufweisen, die von der ersten Längsseite (1) des ersten Paneels (A) nach der dritten Längsseite (5b) des zweiten Paneels (B) verläuft (siehe Fig. 2, 4).

"Identisch" heißt in diesem Zusammenhang, dass alle erfindungswesentlichen Merkmale in gleicher Weise verwirklicht sind. Abweichungen in weiteren (optionalen) Merkmalen sind unerheblich. Beispielsweise umfasst in den Figuren 2 und 4 nur eine Paneele (A) eine oder mehrere Aussparungen (17, 17'). Dennoch sind die Paneele (A, B) identisch im Sinne der Erfindung.

Die durchgehende Nut (11, 11b) kann nach dem Zusammenfügen der Paneele (A, B) als Kabelkanal zur für den Betrachter "unsichtbaren" Verlegung von Kabeln, wie z. B. Stromkabeln, Telefonkabeln, Fernsehkabeln u. ä., Rohren oder anderen Leitungen genutzt werden. Die Anwendung zur "unsichtbaren" Verlegung von Kabeln steht dabei vorliegend im Vordergrund.

Dementsprechend wird vorliegend auch ein Verband unter Schutz gestellt, der mindestens zwei erfindungsgemäße Paneele (A, B) umfasst, die versetzt parallel angeordnet sind und die auf der Unterseite mindestens eine durchgehende Nut (11, 11 b) aufweisen, die von der ersten Längsseite (1) des ersten Paneels (A) nach der dritten Längsseite (5b) des zweiten Paneels (B) verläuft. Weiterhin wird auch ein Verband geschützt, der mindestens ein Kabel, Rohr oder eine andere Leitung umfasst, welches in der durchgehenden Nut (11, 11 b) angeordnet ist.

Für die Durchführung des mindestens eines Kabels, Rohrs oder der mindestens einen anderen Leitung durch die durchgehende Nut (11, 11 b) wird in der durchgehenden Nut (11, 11 b) vorzugsweise ein Führungsmittel angeordnet, das mit dem mindestens einen Kabel, Rohr oder der mindestens einen anderen Leitung lösbar verbunden werden kann. Hierfür besonders geeignete Führungsmittel umfassen Drähte, Schnüre und Kordeln, die vorzugsweise beim Zusammenfügen der Paneele in der durchgehenden Nut (11, 11 b) angeordnet werden.

Die Länge und die Dicke des Führungsmittels wird dabei zweckmäßigerweise derart gewählt, dass das Führungsmittel die beabsichtigten Bestimmungsorte, die später mit mindestens einem Kabel, Rohr oder mindestens einer anderen Leitung verbunden werden sollen, miteinander verbinden kann und dass das Führungsmittel später, wenn es mit mindestens einem Kabel, Rohr oder mindestens einer anderen Leitung lösbar verbunden wird, auf einfache Art und Weise leicht durch die Nut (11) bewegt werden kann.

Im Rahmen einer besonders bevorzugten Variante der vorliegenden Erfindung weist das Paneel mindestens eine Nutöffnung (15) in der dritten Längsseite (5) auf, deren Abstand (X₂) von der vierten Längsseite (7) dem Abstand (X₁) mindestens einer Nutöffnung (13) in der ersten Längsseite (1) von der vierten Längsseite (7) plus 33 % der Gesamtlänge (L) der ersten Längsseite (1) entspricht.

Dies ermöglicht ein Verlegen der Paneele nach Oxford-Muster, bei welchem die Paneele um ein Drittel versetzt parallel angeordnet werden.

Im Rahmen einer weiteren besonders bevorzugten Variante der vorliegenden Erfindung weist das Paneel mindestens eine Nutöffnung (15) in der dritten Längsseite (5) auf, deren Abstand (X₂) von der vierten Längsseite (7) dem Abstand (X₁) mindestens einer Nutöffnung (13) in der ersten Längsseite (1) von der vierten Längsseite (7) plus 50 % der Gesamtlänge (L) der ersten Längsseite (1) entspricht.

Dies ermöglicht ein Verlegen der Paneele nach englischem Muster, bei welchem die Paneele um die Hälfte versetzt parallel angeordnet werden.

Für die Zwecke der vorliegenden Erfindung hat es sich als ganz besonders günstig erwiesen, dass das Paneel mindestens eine Nut (11) umfasst, bei welcher der Abstand (X₁) der ersten Nutöffnung (13) in der ersten Längsseite (1) von der vierten Längsseite (7) und der Abstand (X₂) der zweiten Nutöffnung (15) in der dritten Längsseite (5) von der vierten Längsseite (7) verschieden sind (siehe Fig. 1). Die Nut verläuft dann weder zur ersten und zur dritten Längsseite (1, 5) noch zur zweiten und zur vierten Längsseite (3, 7) parallel oder senkrecht, sondern diagonal.

Besonders vorteilhaft ist weiterhin ein Paneel mit mindestens zwei Nuten (11, 11'), bei welchen die Abstände (X₁, X₁') der ersten Nutöffnung (13, 13') in der ersten Längsseite (1) von der vierten Längsseite (7) und die Abstände (X₂, X₂') der zweiten Nutöffnung (15, 15') in der dritten Längsseite (5) von der vierten Längsseite (7) gleich sind (siehe Fig. 3). Die Nut verläuft dann senkrecht zur ersten und zur dritten Längsseite (1, 5) und parallel zur zweiten und zur vierten Längsseite (3, 7).

Bei Verlegen können natürlich auch Paneele mit verschiedenen Nutenverläufen miteinander kombiniert werden, um über ein modulares System alle denkbaren Kabelverläufe, Rohrverläufe oder Leitungsverläufe zu realisieren.

Zum Anschließen des in der Nut (11) verlegten Kabels, Rohrs oder der anderen Leitung an den Empfänger sind in der Nut (11) vorzugsweise Öffnungen (17) in Richtung der Oberseite des Paneels vorgesehen, um das Kabel, Rohr oder die andere Leitung für den Betrachter unsichtbar durch die Nut (11) bis zu der vorbestimmten Stelle zu führen und an dieser Stelle weiter zu verwenden. Diese Öffnung (17) in der Nut (11) erstreckt sich günstigerweise bis zu einer der Längsseiten (1, 3), die mindestens eine Nutöffnung (13, 15) umfassen.

Vor dem Anschließen des Empfängers wird die sichtbare Öffnung (17) vorzugsweise durch eine geeignete Blende verschlossen.

Im Verband, umfassend mehrere erfindungsgemäße Paneele, sind vorzugsweise mindestens zwei Öffnungen (17) in Richtung der Oberseite der Paneele vorgesehen, ein Eingang und ein Ausgang für das Kabel, Rohr oder die andere Leitung. Zwischen dem Eingang und dem Ausgang sind üblicherweise keine weiteren Öffnungen vorgesehen. Der Abstand zwischen Eingang und Ausgang beträgt vorzugsweise mindestens 2, bevorzugt mindestens 3, besonders bevorzugt mindestens 4, insbesondere mindestens 5 Paneele. Dementsprechend wird in den beiliegenden Figuren nur eine Öffnung pro Nut schematisch dargestellt.

Gemäß einer ganz besonders bevorzugten Ausführungsform der vorliegenden Erfindung umfasst das erfindungsgemäße Paneel Hartholz von Laubbäumen. Besonders geeignete Holzarten in diesem Zusammenhang sind Akazie/Robinie, Ulme/Rüster, Apfelbaum, Birnbaum, Edelkastanie, Eiche (hell), Eiche (dunkel), Buche, Ahorn, Birke, Nussbaum/Walnuss, Kirsche, Esche, Olive, Kambala, Afzelia (Doussie), Jatoba, Cabreuva, Eukalyptus, Mutenye, Bongossi/Azobe, Kosipo, Kotibe, Landa, Limbali, Louro vermelho, Peroba, Merbau, Wenige/Panga-Panga, Teak/Burma, Zebrano, Santos-Palisander, Bubinga und Mahagoni/Sipo/Makrore. Der Gewichtsanteil der Hölzer beträgt vorzugsweise mindestens 50 Gew.-%, bevorzugt mindestens 75 Gew.-%, besonders bevorzugt mindestens 90 Gew.-%, insbesondere mindestens 95 Gew.-%, jeweils bezogen auf das Gesamtgewicht des Paneels.

Gemäß einer weiteren ganz besonders bevorzugten Ausführungsform der vorliegenden Erfindung umfasst das Paneel einen Träger, vorzugsweise einen Schaumstoff-Träger, insbesondere einen Polyurethan-Schaumstoff-Träger, und eine auf dem Träger haftende, vorzugsweise mehrschichtige Verbundplatte. Zweckmäßigerweise umfasst das Paneel zwei auf dem Träger haftende mehrschichtige Verbundplatten, die vorzugsweise auf der Vorder- und der Rückseite des Trägers angebracht sind.

Für diese Zwecke geeignete mehrschichtige Verbundplatten sind an sich bekannt und werden beispielsweise in der WO 2009/080171 beschrieben.

Sie enthalten in der Kernschicht vorzugsweise eine oder mehrere Bögen Kraftpapier. Das in diesem Zusammenhang bevorzugt verwendete Kraftpapier ist nach DIN 6730 ein Papier, das überwiegend aus Kraftzellstoff besteht, dem Kraftzellpapier zugesetzt sein kann, und das eine hohe Festigkeit, insbesondere eine hohe Zugfestigkeit, und eine hohe Beständigkeit aufweist. Kraftpapier wird üblicherweise wenigstens zu 90 % aus frischem, vorzugsweise ungebleichtem Sulfatzellstoff (Kraftzellstoff) hergestellt. Ferner kann Kraftpapier neben dem Zellstoff noch Stärke, Alaun und/oder Leim enthalten, um z. B. bestimmte Oberflächeneffekte und Festigkeitssteigerungen zu erzielen. Für die Zwecke der vorliegenden Erfindung hat sich Kraftpapier mit einer Grammatur von 150 g/m² bis 300 g/m², insbesondere 170 g/m² bis 250 g/m² als besonders vorteilhaft erwiesen. Ein bevorzugtes Kraftpapier ist Natron-Kraftpapier, das dem Fachmann auf dem Gebiet der HPL geläufig ist.

Die Anzahl der eingesetzten Kraftpapierbögen hängt im Wesentlichen von der gewünschten Dicke der Kernschicht bzw. der Verbundplatte ab. Vorzugsweise enthält die Verbundplatte ein bis acht Bögen, bevorzugter 3 bis 7 Bögen und insbesondere 4 bis 6 Bögen Kraftpapier.

Das Gewicht des verwendeten Kraftpapiers ist nicht weiter eingeschränkt. Es hängt insbesondere von der Anzahl der eingesetzten Kraftpapierbögen und somit von der gewünschten Dicke der Verbundplatte ab. Gemäß einer bevorzugten Ausführungsform liegt das Gewicht der verwendeten Kraftpapierbögen im Bereich von 125 g/m² bis 250 g/m², vorzugsweise 140 g/m² bis 230 g/m².

Gemäß einer bevorzugten Ausführungsform liegt die Enddicke der Verbundplatte im Bereich von 0,75 mm bis 0,85 mm, vorzugsweise bei 0,8 mm. In diesem Fall kann es bevorzugt sein, wenn 4 Kraftpapierbögen verwendet werden, die ein Gewicht von 125 g/m² bis 175 g/m², vorzugsweise 150 g/m² aufweisen. Andererseits können hierfür auch 3 Kraftpapierbögen eingesetzt werden, die ein Gewicht im Bereich von 200 g/m² bis 240 g/m² aufweisen.

Gemäß einer weiteren bevorzugten Ausführungsform liegt die Enddicke der Verbundplatte im Bereich von 0,95 mm bis 1,05 mm, vorzugsweise bei 1,0 mm. In diesem Fall kann es bevorzugt sein, wenn 5 Kraftpapierbögen verwendet werden, die ein Gewicht von 125 g/m² bis 175 g/m², vorzugsweise 150 g/m² aufweisen. Andererseits können hierfür auch 4 Kraftpapierbögen eingesetzt werden, die ein Gewicht im Bereich von 200 g/m² bis 240 g/m² aufweisen.

Gemäß noch einer ebenfalls weiteren bevorzugten Ausführungsform liegt die Enddicke der Verbundplatte im Bereich von 1,15 mm bis 1,25 mm, vorzugsweise bei 1,2 mm. In diesem Fall kann es bevorzugt sein, wenn 6 Kraftpapierbögen verwendet werden, die ein Gewicht von 125 g/m² bis 175 g/m², vorzugsweise 150 g/m² aufweisen. Andererseits können hierfür auch 5 Kraftpapierbögen eingesetzt werden, die ein Gewicht im Bereich von 200 g/m² bis 240 g/m² aufweisen.

Auf einer Seite der aus Kraftpapier gebildeten Kernschicht der mehrschichtigen Verbundplatte ist eine Dekorschicht aufgebracht, die einen Bogen Dekorpapier umfasst.

Durch diese Schicht aus Dekorpapier erhält die dekorative, mehrschichtige Verbundplatte und somit das erfindungsgemäße Paneel seine Optik. Demnach bezeichnet die Dekorschicht diejenige auf der Kernschicht aufgebrachte Schicht, deren Muster vom Betrachter visuell wahrgenommen werden kann.

Hierin verwendet bezieht sich Dekorpapier auf jedes Material, das für die Verbindung mit der darunter liegenden Kernschicht und gegebenenfalls der darüber liegenden Overlayschicht geeignet ist und ein Dekor wiedergeben kann. Das bevorzugte Material für das Dekorpapier ist Papier. Allerdings können auch gleichermaßen Folien, zum Beispiel Kunststofffolien, oder Furniere unter dem Begriff Dekorpapier erfasst sein. Furniere sind Holzblätter, die in der Regel eine Dicke von 0,1 mm bis 3 mm aufweisen und der Dekorschicht eine Holzoptik, z. B. eine bestimmte Maserung, verleihen können.

Üblicherweise wird das Dekor auf das Dekorpapier mittels eines Druckprozesses aufgebracht. So kann beispielsweise mittels fototechnischer Reproduktion ein beliebiges Motiv erstellt und im Tiefdruckverfahren auf das Dekorpapier aufgedruckt werden. Das Motiv kann zum Beispiel aus Holz-, Stein-, Keramik, Farb- und/oder Fantasiemustern bestehen. Ferner kann das Motiv aber auch durch Bestreichen des Dekorpapiers mit einer oder mehreren Farben erfolgen.

Das Flächengewicht des verwendeten Dekorpapiers ist nicht weiter eingeschränkt. Vorzugsweise liegt das Flächengewicht im Bereich von 40 g/m² bis 120 g/m², mehr bevorzugt im Bereich von 60 g/m² bis 100 g/m², insbesondere bei 70 g/m² bis 90 g/m².

Zwischen der Kernschicht und der Dekorschicht können gegebenenfalls weitere Schichten, wie zum Beispiel eine Underlayschicht, angeordnet sein. Diese Underiayschicht kann beispielsweise dazu dienen, den Verzug der Verbundplatte zu verhindern oder elektrostatische Aufladungen zu reduzieren. Vorzugsweise umfasst die Underlayschicht einen oder mehrere Bögen Kraftpapier.

Wenn die Verbundplatte eine Overlayschicht aufweist, dann bildet diese vorzugsweise die Deckschicht für die mehrschichtige Verbundplatte und ist auf der Dekorschicht aufgebracht. Die Overlayschicht umfasst einen oder mehrere Bögen eines vorzugsweise faserhaltigen Materials.

Das Flächengewicht der für die Overlayschicht verwendeten Bögen ist nicht weiter eingeschränkt. Es liegt vorzugsweise im Bereich von 12 g/m² bis 40 g/m², bevorzugter im Bereich von 20 g/m² bis 35 g/m² und noch mehr bevorzugt im Bereich von 25 g/m² bis 32 g/m².

Das Overlaymaterial weist vorzugsweise eine hohe Beständigkeit gegenüber chemischer, thermischer und mechanischer Beanspruchung auf. Wenn für die Herstellung des Overlays faserhaltiges Material verwendet wird, dann enthält dieses faserhaltige Material vorzugsweise gebleichte Zellstofffaser, insbesondere Zellulose, zum Beispiel α-Zellulose. Das Overlaymaterial ist vorzugsweise von einer Beschaffenheit, die es gewährleistet, dass das unter dem Overlay liegende Motiv der Dekorpapierschicht nach dem Verpressen zu dem dekorativen, mehrschichtigen Verbundwerkstoff sichtbar ist. Daher weist das Overlay bevorzugt einen hohen Grad an Transparenz auf.

Gemäß einer besonders bevorzugten Ausführungsform der vorliegenden Erfindung enthält die Verbundplatte Partikel mit einer Mohs-Härte von wenigstens 8, vorzugsweise wenigstens 8,5 und noch bevorzugter wenigstens 9.

Zweckmäßigerweise handelt es sich bei den Partikeln um Partikel aus Korund (Aluminiumoxid), Siliciumcarbid, Aluminiumborid, Borcarbid oder Mischungen davon. Besonders bevorzugt sind Korundpartikel, insbesondere Partikel aus Edelkorund. Die Korundpartikel können beispielsweise überwiegend scharfkantig oder kubisch sein und sind vorzugsweise überwiegend kubisch.

Die Partikel können auf dem Fachmann bekannte Weise oberflächenbehandelt sein. Zum Beispiel können die Partikel eine Beschichtung mit Silan-Verbindungen aufweisen. Vorzugsweise sind die Partikel jedoch unbeschichtet.

Die Partikel mit einer Mohs-Härte von wenigstens 8 weisen vorzugsweise eine bestimmte Korngrößenverteilung auf, die nach dem FEPA-Standard 42-2:2006 ermittelt wird. In diesem Standard sind unter anderem d3-Werte, d94-Werte und D50-Werte definiert, wobei der D50-Wert die mittlere Korngröße der Partikel angibt. Als mittlere Korngröße wird dabei die Korngröße bezeichnet, bei der 50 Prozent der Teilchen eine Korngröße kleiner und 50 Prozent der Teilchen eine Korngröße größer als die mittlere Korngröße haben.

Die mittlere Korngröße D50 der verwendeten Partikel mit einer Mohs-Härte von wenigstens 8 liegt vorteilhafterweise im Bereich von 5 µm bis 100 µm. Der maximale d3-Wert liegt vorzugsweise oberhalb der mittleren Korngröße der Partikel, zum Beispiel 1,4- bis 2,2-mal oberhalb der mittleren Korngröße der Partikel. Der Mindest-d94-Wert liegt vorzugsweise unterhalb der mittleren Korngröße der Partikel und beträgt zum Beispiel das 0,20- bis 0,68-fache der mittleren Korngröße der Partikel.

In diesem Zusammenhang ganz besonders geeignete Partikel werden in der WO 2009/080171 beschrieben.

Die Verbundplatte des erfindungsgemäßen Paneels weist vorzugsweise eine Bindemittelanordnung auf, in der die Kernschicht und die Dekorschicht vorgesehen sind und die eine auf der Dekorschicht angeordnete Bindemittelschicht bildet, die vorteilhafterweise Partikel mit einer Mohs-Härte von wenigstens 8 enthält

Diese Bindemittelanordnung enthält bevorzugt wenigstens ein, vorzugsweise jedoch wenigstens zwei verschiedene Bindemittel im ausgehärteten Zustand. Durch dieses wenigstens eine ausgehärtete Bindemittel werden die einzelnen Bögen aus Kraftpapier untereinander und die aus den Kraftpapierbögen gebildete Kernschicht und die Dekorschicht miteinander verbunden. Die Dekorschicht wird vorzugsweise dabei auf der aus den Kraftpapierbögen gebildeten Kernschicht aufgebracht. Auf der Dekorschicht wiederum liegt vorzugsweise eine gehärtete Bindemittelschicht vor, die bevorzugt Partikel mit einer Mohs-Härte von wenigstens 8 enthält.

Gemäß einer bevorzugten Ausführungsform ist das Bindemittel, das im gehärteten Zustand die Kraftpapierbögen untereinander und die aus den Kraftpapierbögen aufgebaute Kernschicht mit der Dekorschicht verbindet, ein wärmehärtendes Harz. Bevorzugte Bindemittel sind flüssige oder verflüssigbare Harze, die für sich allein oder mit Reaktionsmitteln, zum Beispiel Härtern oder Beschleunigern, ohne Abspaltung flüchtiger Komponenten durch Polymerisation oder Polyaddition über Vernetzungsreaktionen zu Duroplasten aushärten. Als besonders bevorzugt haben sich hierfür Phenolharze erwiesen. Phenolharze sind nach DIN 16916, Teil 1 und ISO 10082 als Kondensationsprodukte von Phenolen und Aldehyden definiert. Unsubstituiertes Phenol und Formaldehyd sind die Hauptrohstoffe zur Herstellung von Phenolharzen. Zu Einzelheiten der Chemie der Phenolharze wird auf folgende Literatur verwiesen: A. Gardziella, L.A. Pilato, A. Knop, "Phenolic Resins", Springer Verlag, Berlin, Heidelberg, New York, Tokio, 1999; A. Gardziella, H.G. Haub, "Phenolharze" in: Kunststoff Handbuch, Band 10, "Duroplaste", S. 12-40, Carl Hanser Verlag, München, Wien, 1988; P. Adolphs, E. Giebeler, P. Stäglich, "Houben-Weyl, Methoden der Organischen Chemie", Band E20, Teil 3, S. 1974-1810, 4. Auflage, Georg Thieme Verlag, Stuttgart. Gemäß einer ganz besonders bevorzugten Ausführungsform wird als Binder für die Kraftpapierbögen Phenol-Formaldehyd-Harz verwendet.

Das Bindemittel, das im gehärteten Zustand die Dekorschicht mit der Kernschicht verbindet und die Bindemittelschicht bildet, die bevorzugt Partikel mit einer Mohs-Härte von wenigstens 8 enthält, ist vorzugsweise ebenfalls ein wärmehärtendes Harz. Für die Zwecke der vorliegenden Erfindung hat sich hierfür die Verwendung von Aminoplasten als vorteilhaft erwiesen. Aminoplaste sind Poykondensationsprodukte aus Carbonyl-Verbindungen, vorzugsweise Aldehyden, wie Formaldehyd, oder Ketonen, und NH-Gruppen enthaltenden Verbindungen, wie Harnstoff, Melamin, Urethane, Cyan- bzw. Cyandiamid, aromatische Amine und Sulfonamide, die in einer Art Mannich-Reaktion miteinander verknüpft werden und bei der Anwendung zu Duroplasten aushärten. Bevorzugte Aminoplasten sind Harnstoffharze, Melaminharze, Urethanharze, Cyan-, bzw. Cyandiamidharze, Anilinharze und Sulfonamidharze. Als besonders bevorzugt hat sich die Verwendung von Melamin-Formaldehyd-Harzen herausgestellt. Darunter sind härtbare Kondensationsprodukte aus Melamin und Formaldehyd zu verstehen. Ferner können auch Melamin-Harnstoff-FormaldehydHarze bevorzugt sein.

Gemäß einer weiteren Ausführungsform umfasst die Verbundplatte auch eine Overlayschicht, die auf der Dekorschicht angeordnet ist. In dieser Ausführungsform ist die Bindemittelschicht, die bevorzugt Partikel mit einer Mohs-Härte von wenigstens 8 enthält, nicht auf der Dekorschicht, sondern vorzugsweise auf der Overlayschicht gebildet. In diesem Fall ist es bevorzugt, wenn das Bindemittel, das im gehärteten Zustand die Overlayschicht mit der Dekorschicht verbindet und die Bindemittelschicht bildet, die bevorzugt Partikel mit einer Mohs-Härte von wenigstens 8 enthält, eines der vorstehend beschriebenen wärmehärtenden Harze, besonders bevorzugt eines der vorstehend beschriebenen Aminoplaste, wie zum Beispiel ein Melamin-Formaldehyd-Harz oder ein Melamin-Harnstoff-Formaldehyd-Harz, ist. Dabei ist es bevorzugt, wenn für das Verbinden der Dekorschicht mit der Kernschicht, für das Verbinden der Overlayschicht mit der Dekorschicht und für das Bilden der Bindemittelschicht, die vorzugsweise Partikel mit einer Mohs-Härte von wenigstens 8 enthält, dasselbe Bindemittel, bevorzugt eines der vorstehend beschriebenen wärmehärtenden Harze, besonders bevorzugt eines der vorstehend beschriebenen Aminoplaste, wie zum Beispiel ein Melamin-Formaldehyd-Harz oder ein Meiamin-Harnstoff-Formaldehyd-Harz, verwendet wird.

Wenn zwischen der Kernschicht und der Dekorschicht eine Underlayschicht vorgesehen ist, dann ist das Bindemittel, das gegebenenfalls die Underlaybögen untereinander, die Kernschicht mit der Underlayschicht und die Underlayschicht mit der Dekorschicht verbindet, vorzugsweise eines der vorstehend beschriebenen wärmehärtenden Harze, besonders bevorzugt eines der vorstehend beschriebenen Aminoplaste, wie zum Beispiel ein Melamin-Formaldehyd-Harz oder ein Melamin-Harnstoff-Formaldehyd-Harz.

Dem Fachmann ist klar, dass es insbesondere an den Grenzflächen einzelner Schichten, wie beispielsweise der Grenzfläche zwischen Kernschicht und Dekorschicht zu einem Vermischen der verwendeten Bindemittel kommen kann und die Grenzen zwischen den einzelnen Schichten zumeist nicht durch das verwendete Bindemittel, sondern vor allem durch die äußersten, die einzelnen Schichten bildenden Bögen definiert werden.

Die Beladung der Bindemittelschicht mit Partikeln mit einer Mohs-Härte von wenigstens 8 liegt, bezogen auf die Oberfläche der Verbundplatte, bevorzugt im Bereich von 21 g/m² bis 35 g/m², vorzugsweise im Bereich von 22 g/m² bis 32 g/m² und noch mehr bevorzugt im Bereich von 23 g/m² bis 29 g/m².

Die Verbundplatte wird vorzugsweise erhalten, indem man einen Aufbau herstellt, der Kraftpapierbögen, den Dekorpapierbogen und gegebenenfalls den Overlaybogen, sowie die Partikel und ein geeignetes Bindemittelsystem enthält, diesen Aufbau zwischen spezielle Pressplatten einbringt, verpresst und das Bindemittelsystem dabei aushärtet.

Unter Bindemittelsystem wird erfindungsgemäß ein einzelnes geeignetes Bindemittel oder eine Kombination von geeigneten Bindemitteln verstanden. Unter geeigneten Bindemitteln werden vorzugsweise diejenigen Bindemittel verstanden, die vorstehend als bevorzugt für das Verbinden der einzelnen in der Verbundplatte enthalten Schichten bzw. das Verbinden der die Schichten bildenden Bögen beschrieben worden sind.

Weitere Details zur Herstellung und zu den Eigenschaften von für die Zwecke der vorliegenden Erfindung besonders geeignete Verbundplatten können der WO 2009/080171 entnommen werden.

Die fertige Verbundplatte weist, je nach gewähltem Aufbau, unterschiedliche Dicken auf. Übliche Dicken liegen im Bereich von 0,5 mm bis 2 mm, vorzugsweise im Bereich von 0,6 mm bis 1,5 mm und besonders bevorzugt im Bereich von 0,8 mm bis 1,2 mm. Es ist allerdings auch möglich, Verbundplatten mit weitaus größeren Dicken, wie beispielsweise im Bereich von 2 mm bis 20 mm herzustellen.

Enthält die Verbundplatte eine Overlayschicht, dann liegt deren Dicke vorzugsweise im Bereich von 80 µm bis 120 µm, besonders bevorzugt im Bereich von 80 µm bis 110 µm. Als Dicke der Overlayschicht wird hierbei vorzugsweise der Abstand zwischen der der Dekorschicht abgewandten Außenseite der Bindemittelschicht und der Außenseite des mit der Overlayschicht in Kontakt stehenden Dekorpapierbogens verstanden. Die Dicke der Dekorschicht liegt vorzugsweise im Bereich von 65 µm bis 140 µm, besonders bevorzugt im Bereich von 65 µm bis 80 µm. Als Dicke der Dekorschicht wird hierbei vorzugsweise der Abstand zwischen der mit der Overlayschicht in Kontakt stehenden Außenseite des Dekorpapierbogens und der Außenseite des mit der Dekorschicht in Kontakt stehenden Kraftpapierbogens der Kernschicht verstanden. Die Dicke der Kernschicht kann je nach gewünschter Dicke der Verbundplatte stark variieren und liegt vorzugsweise im Bereich von 250 µm bis 1900 µm, besonders bevorzugt im Bereich von 500 µm bis 1500 µm.

Enthält die Verbundplatte keine Overlayschicht, dann liegt die Dicke der Dekorschicht ebenfalls vorzugsweise im Bereich von 65 µm bis 140 µm, besonders bevorzugt im Bereich von 80 µm bis 140 µm. Die Dicke der Dekorschicht bezeichnet in diesem Fall vorzugsweise den Abstand zwischen der der Kernschicht abgewandten Außenseite der Bindemittelschicht und der Außenseite des mit der Dekorschicht in Kontakt stehenden Kraftpapierbogens der Kernschicht. Die Dicke der Kernschicht kann unabhängig von der Gegenwart einer Overlayschicht beispielsweise im Bereich von 250 µm bis 1900 µm, besonders bevorzugt im Bereich von 500 µm bis 1500 µm, liegen.

Das Endgewicht der Verbundplatte ist von mehreren Faktoren, wie z. B. der Dicke der Verbundplatte, dem Gewicht der eingesetzten Komponenten und der Anzahl der verwendeten Bögen, abhängig. Vorzugsweise liegt das Gewicht der Verbundplatte im Bereich von 1,2 kg/m² bis 1,6 kg pro m² Oberfläche der Verbundplatte (kg/m²), besonders bevorzugt im Bereich von 1,3 kg/m² bis 1,5 kg/m², z. B. bei 1,4 kg/m².

Neben der Verbundplatte umfasst das Paneel gemäß dieser Ausführungsform der Erfindung einen Träger.

Für die Zwecke der vorliegenden Erfindung handelt es sich um einen Polyurethan-Schaumstoff-Träger, insbesondere um einen Polyurethan- Polyisocyanurat-Schaumstoff-Träger.

Polyurethane (PU, DIN-Kurzzeichen: PUR) sind Kunststoffe oder Kunstharze, welche aus der Polyadditionsreaktion von vorzugsweise kurzkettigen Diolen oder Polyolen mit Polyisocyanaten, wie z. B. Diphenylmethan-4,4-diisocyanat (MDI), Diphenylmethan-2,4'-diisocyanat, 4,4'-Methylendicyclohexyldiisocyanat (HMDI), 2,4-Toluoldiisocyanat und/oder 2,6-Toluoldiisocyanat (TDI), entstehen. Die Verknüpfung erfolgt durch die Reaktion einer Isocyanatgruppe (-N=C=O) eines Moleküls mit einer Hydroxylgruppe (-OH) eines anderen Moleküls unter Bildung einer Urethangruppe (-NH-CO-O-). Dabei erfolgt keine Abspaltung von Nebenprodukten wie bei der Polykondensation.

Je nach Ausgangsstoffen können lineare oder vernetzte Polymere erhalten werden. Lineare Polyurethane können beispielsweise aus Diolen und Diisocyanaten erhalten werden. Durch Zugabe von weiterem Diisocyanat können lineare Polyurethane nachträglich vernetzt werden. Alternativ können vernetzte Polyurethane auch durch die Reaktion von Di- oder Triisocyanaten mit Polyolen hergestellt werden.

Das "Aufschäumen" des Polyurethans erfolgt üblicherweise in einer Nebenreaktion. Dabei reagiert Wasser mit einigen Isocyanatgruppen und setzt Kohlenstoffdioxid frei, das den noch weichen Kunststoff aufquellen lässt. Die gleichzeitig entstandene primäre Aminogruppe reagiert mit einer Isocyanatgruppe zu einem substituierten Harnstoff. Alternativ können auch niedrige siedende Lösungsmittel, wie z. B. Pentan oder Hexan, während der Polymerisation zugesetzt und später verdampft werden.

Polyisocyanurate (Kurzzeichen PIR) bezeichnen einen dem Polyurethan verwandten Kunststoff. Der Anteil der Polyisocyanate ist höher als bei PU. Weiterhin wird als Reaktionspartner ein Polyesterpolyol anstelle eines Polyetherpolyols verwendet. Als Strukturelement in PIR kommt die tautomere Isocyanursäure vor.

### Bevorzugte Polyisocyanurate umfassen Gruppierungen der Formel (i)

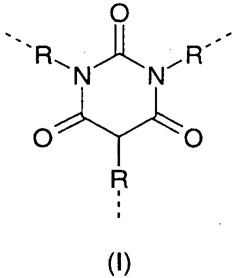

als charakterisches Grundelement der Makromoleküle, wobei die Reste R, jeweils unabhängig voneinander, für einen ggf. substituierten Kohlenstoff umfassenden Rest, bevorzugt für einen ggf. substituierten, aliphatischen, cycloaliphatischen oder aromatischen Rest, stehen. Sie sind vorzugsweise zugänglich durch Cyclotrimerisierung von Di- und Polyisocyanaten. Technisch wird hierzu bevorzugt das "polymere" PDMI der Struktur (II) verwendet, 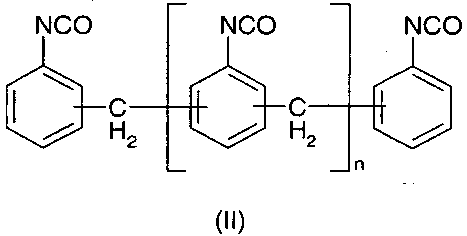 wobei n für eine Zahl größer gleich 1 steht.

Für weitere Details zu diesen Polymeren wird auf die gängige Fachliteratur, insbesondere auf Römpp-Lexikon Chemie, Hrsg. Jürgen Falbe; Manfred Regitz. Bearb. von Eckard Amelingmeier; Stuttgart, New York; Thieme; 10. Auflage, Band 5 PI-S; 1999, Stichworte "Polyurethane" und "Polyisocyanurate"; Encycl. Polym. Sci. Eng. 13, 243 - 303; Houben-Weyl, E 20/2, 1561 - 1721 und Ullmann, 4. Auflage, 15, 442 sowie die dort genannten Fundstellen, verwiesen.

Der erfindungsgemäße Träger kann weiterhin Füllstoffe umfassen. Besonders geeignet sind in diesem Zusammenhang Polymere, insbesondere Polyurethane, die günstigerweise fein gemahlen sind.

Das Gewicht des Trägers ist aufgrund der kleinen Dichte des Schaumstoffs vergleichsweise gering. Diese ist vorzugsweise kleiner 700 kg/m³ und liegt bevorzugt im Bereich von größer 500 bis kleiner 650 kg/m³, besonders bevorzugt im Bereich von größer 520 bis kleiner 600 kg/m³, insbesondere im Bereich von größer 540 bis kleiner 580 kg/m³. Diese Angabe bezieht sich, wie auch für alle anderen Größen, sofern nicht anders angegeben, auf Raumtemperatur (20°C).

Im Rahmen der vorliegenden Erfindung liegt der Schaumstoff-Träger vorzugsweise als Hartschaumstoff vor. Hartschaumstoffe bezeichnen gemäß DIN 7726 (05/1982) Schaumstoffe, die einer Verformung unter Druckbelastung einen relativ hohen Widerstand entgegensetzen. Die Druckspannung bei 10 % Stauchung bzw. Druckfestigkeit nach DIN 53421, 06/1984 ist bevorzugt mindestens 80 kPa.

Weiterhin weist der Schaumstoff zweckmäßigerweise eine geschlossenzellige Struktur auf, bei der die Wände zwischen den einzelnen Zellen sind komplett geschlossen sind.

Die Druckfestigkeit des Schaumstoffs nach DIN 826 liegt bevorzugt im Bereich von 5,5 MPa bis 7,5 MPa.

Die Biegefestigkeit des Schaumstoffs nach DIN EN 12089 ist vorteilhafterweise größer 2,0 MPa, zweckmäßigerweise größer 3,0 MPa, bevorzugt größer 4,0 MPa, geeigneterweise im Bereich von 3,0 MPa bis 10,0 MPa, insbesondere im Bereich von 5,0 MPa bis 7,0 MPa.

Die Scherfestigkeit des Schaumstoffs nach DIN EN 12090 liegt vorzugsweise im Bereich von 1 MPa bis 1,5 MPa.

Die Schubfestigkeit des Schaumstoffs nach DIN EN 12090 ist vorteilhafterweise im Bereich von 1 MPa bis 1,5 MPa.

Die Dickenquellen des Schaumstoffs nach DIN EN 68763 für 24 Stunden bei 20°C beträgt vorzugsweise weniger als 1 %.

Verfahren und Mittel zum festen Verbinden von Verbundplatte und Träger, vorzugsweise Schaumstoff-Träger, insbesondere Polyurethan-Träger, sind aus dem Stand der Technik bekannt. Beispielsweise kann das feste Verbinden von Verbundplatte und Träger durch Verkleben oder mit Hilfe von aus dem Stand der Technik bekannten Verbindungselementen erfolgen.

In diesem Zusammenhang besonders geeignete Kleber umfassen insbesondere Holzleime, d. h. Klebstoffe aus natürlichen oder synthetischen Grundstoffen, die zum Verbinden von Holz und Holzwerkstoffen verwendet werden. Hierzu gehören u. a. Glutinleime, Kaseinleime, Harnstoff-Formaldehydharzleime (auch Polykondensationsleime oder UF-Leime genannt), Phenol-Formaldehydharzleime (auch PF-Leime genannt), Resorzin-Formaldehydharzleime (auch RF-Leime genannt), Formaldehydarme Polykondensationsleime, Formaldehydfreie Dispersionsleime (Weißleime) sowie PU-Leime. Ganz besonders vorteilhafte Ergebnisse werden mit sogenannten D4-Holzleimen (Einteilung gemäß DIN EN 204) erzielt, wobei bevorzugt Weißleime, d. h. formaldehydfreie Dispersionsleime, basierend auf Polyvinylacetat als Bindemittel, eingesetzt werden, die vorzugsweise einen Härter enthalten.

Das Verbinden der Verbundplatte mit dem Trägermaterial erfolgt vorzugsweise derart, dass die Oberfläche der Verbundplatte, die der Dekorschicht gegenüberliegt, mit einer Oberfläche des Trägers in Kontakt steht. Bevorzugt stehen daher in dem Paneel eine Oberfläche des Trägers und eine durch die Kernschicht der Verbundplatte gebildete Oberfläche in Kontakt.

Die Abhebefestigkeit der Verbundplatte von dem Träger nach DIN EN 311 beträgt vorzugsweise mindestens 0,8 N/mm², zweckmäßigerweise mindestens 1,0 N/mm², besonders bevorzugt mindestens 1,2 N/mm², insbesondere mindestens 1,3 N/mm².

Das Paneel kann zudem weitere aus dem Stand der Technik bekannte Funktionsmaterialien aufweisen. Beispielhaft seien Materialien zum Flammschutz, zur Abschirmung von Strahlung, zur Schalldämpfung, zur Stabilisierung und zur Feuchtigkeitssperre genannt. Bevorzugte Funktionsmaterialien umfassen einen Gegenzug und/oder eine Trittschalldämpfung, wie sie bevorzugt bei Bodenplatten verwendet werden.

Die Dicke des Paneels ist nicht weiter eingeschränkt. Sie liegt vorzugsweise im Bereich von 11 mm bis 51 mm, günstigerweise im Bereich von 13 mm bis 39 mm, bevorzugt im Bereich von 16 mm bis 24 mm, besonders bevorzugt im Bereich von 17 mm bis 23 mm und ganz besonders bevorzugt im Bereich von 18 mm bis 22 mm. Die Dicke der in dem Paneel vorhandenen Verbundplatte kann, wie vorstehend beschrieben, vorzugsweise im Bereich von 0,5 mm bis 2,0 mm, besonders bevorzugt im Bereich von 0,6 mm bis 1,5 mm und ganz besonders bevorzugt im Bereich von 0,8 mm bis 1,2 mm liegen. Die Dicke des Trägers liegt vorzugsweise im Bereich von 10 mm bis 50 mm, bevorzugt im Bereich von 12 mm bis 38 mm, zweckmäßigerweise im Bereich von 15 mm bis 23 mm, besonders bevorzugt im Bereich von 16 mm bis 22 mm, ganz besonders bevorzugt im Bereich von 17 mm bis 21 mm. Der gegebenenfalls vorgesehene Gegenzug und/oder die Trittschalldämpfung weisen vorzugsweise eine Dicke im Bereich von 0,5 mm bis 3 mm, besonders bevorzugt im Bereich von 1 mm bis 2 mm auf.

Das Endgewicht des Paneels ist nicht besonders eingeschränkt. Es liegt vorzugsweise im Bereich von 10 kg/m² bis 16 kg pro m² Oberfläche des Paneels (kg/m²), besonders bevorzugt im Bereich von 11 kg/m² bis 15 kg/m² und ganz besonders bevorzugt im Bereich von 12 kg/m² bis 14 kg/m².

Das erfindungsgemäße Paneel lässt sich auf für den Fachmann selbstverständliche Weise verarbeiten. Zu diesem Zweck weist mindestens eine Längsseite (1, 3, 5, 7) des Paneels ein Klick-System auf, um das Paneel mit einem weiteren Paneel formschlüssig zu verbinden. Insbesondere kann das Paneel mit einer Nut- und Feder-Struktur versehen sein, um das flächenmäßige Verbinden einer Vielzahl solcher Paneele zur Herstellung von brettartigen oder fliesenartiges Strukturen zu ermöglichen.

Bevorzugt wird eine Verbindung von mehreren Paneelen durch Anwinkeln oder Neigen der Paneele, wobei die vorzugsweise formschlüssige Verbindung der Paneele zweckmäßigerweise durch horizontale Bewegung der Platten nicht lösbar ist. Besonders bevorzugt werden "Neige-Verriegelungssysteme", insbesondere solche, die ein vertikales Abklappen der Paneele erlauben.

"Anwinkeln" bzw. "Neigen" bezeichnet in diesem Zusammenhang eine Verbindung, die durch eine Drehbewegung hergestellt wird, in deren Verlauf eine Änderung des Winkels zwischen zwei Teilen stattfindet, die verbunden oder getrennt werden. Wenn sich "Neigen" auf die Verbindung von zwei Bodenplatten bezieht, findet die Winkelbewegung so statt, dass die oberen Teile von Verbindungskanten wenigstens während eines Teils der Bewegung wenigstens teilweise in Kontakt miteinander sind.

Der Begriff "Neige-Verriegelungssystem" bezeichnet ein mechanisches Verriegelungssystem, das durch Neigen vertikal und horizontal verbunden werden könnte und eine Feder sowie eine Nut, die zwei benachbarte Kanten in einer vertikalen Richtung verriegelt, und einen Verriegelungsstreifen mit einem Verriegelungselement an einer Kante einer Platte umfasst, die als "Leistenplatte" bzw. "Streifen-Platte" bezeichnet wird und mit einer Verriegelungsnut an einer anderen Kante einer Platte zusammenwirkt, die als "Nutplatte" bezeichnet wird und die Kanten in einer horizontalen Richtung verriegelt. Das Verriegelungselement und die Verriegelungsnut haben im Allgemeinen abgerundete Führungsflächen, die das Verriegelungselement in die Verriegelungsnut hinein führen, sowie Verriegelungsflächen, die Verriegelung bewirken und horizontale Trennung der Kanten verhindern.

Vertikales Abklappen ist keine reine Kombination beispielsweise aus einem Neigungs-Verriegelungssystem an langen Kanten und einem vertikalen Verriegelungssystem an kurzen Kanten, da die vertikal gerichteten und die Neigevorgänge kombiniert werden und die kurzen Kanten wie eine Schere zusammengeklappt werden. Das Verriegeln findet allmählich von einem Kantenabschnitt an eine lange Kante angrenzend, der geneigt wird, zu dem anderen Kantenabschnitt an die andere gegenüberliegende lange Kante angrenzend statt. Ein derartiges Verriegeln von zwei aneinander grenzenden Kanten wird als ein "Abklapp-Verriegeln" bezeichnet.

"Vertikales Abklappen" ist ein Verriegeln von drei Platten, bei dem eine Kombination aus Neigen an langen Kanten und Abklappen an kurzen Kanten verwendet wird. "Vertikales Abklappen entlang der vertikalen Ebene" bezeichnet ein vertikales Abklappen, wobei die oberen Ränder von zwei kurzen Kanten im Wesentlichen während des gesamten Abklappvorgangs in Kontakt sind, bis die Kanten aneinander verriegelt sind.

Vor diesem Hintergrund ist es besonders vorteilhaft, wenn mindestens eine Längsseite des Paneels, bevorzugt mindestens zwei Längsseiten des Paneels, insbesondere alle Längsseiten des Paneels, ein Klick-System aufweisen, um das Paneel mit einem oder mehreren weiteren Paneelen formschlüssig verbinden zu können, insbesondere durch "Anwinkeln" oder "Neigen" der Paneele. Ein Verleimen der Paneele an den Verbindungsstellen ist dabei vorzugsweise nicht erforderlich, vor dem Hintergrund einer einfachen Lösbarkeit der Verbindung zu einem späteren Zeitpunkt sogar nicht gewünscht.

Günstigerweise ist das Klick-System als eine Nut-Feder (tongue in groove) Verbindung ausgebildet, die eine Verriegelung in vertikaler Richtung senkrecht zur Ebene der verbundenen Paneele bewirken kann. Vorzugsweise sind darüber hinaus weitere Verriegelungselemente vorgesehen, durch welche auch eine Verriegelung in horizontaler Richtung senkrecht zu den verbundenen Kanten und in der Ebene der verbundenen Paneele erreicht werden kann. Verriegelungselemente dieser Art ermöglichen es, dass zwischen den Paneelen eine Verbindung in vertikaler Richtung senkrecht zur Ebene der verbundenen Paneele sowie in horizontaler Richtung senkrecht zu den verbundenen Kanten und in der Ebene der verbundenen Paneele erhalten wird, so wie dies beispielsweise aus der WO 97/47834 bekannt ist.

Besonders zweckmäßig sind in diesem Zusammenhang Winkelsysteme, wie z. B. das Woodloc-System, bei welchen die Paneele in eine CNC-gefräste Form von oben eingewinkelt werden können. Weitere Details zu solchen Klick-Systemen, insbesondere dem Woodloc-System können der Fachliteratur, insbesondere der WO 2008/004960 entnommen werden. Die in dieser Druckschrift beschriebenen Varianten und bevorzugten Ausführungsformen sind auch im Rahmen der vorliegenden Erfindung besonders bevorzugt.

Weiterhin sind sogenannte "Fold-Down"-Systeme besonders vorteilhaft, bei denen die Paneele vorzugsweise mit speziellen Nut-Federsystemen versehen werden, wie sie z. B. in den deutschen Gebrauchsmustern DE 20 2007 018 802 U1 und DE 20 2007 018 804 U1 sowie der Patentanmeldung WO 2007/008139 A1 beschrieben werden.

Im Rahmen einer ersten besonders bevorzugten Ausführungsform der vorliegenden Erfindung bilden die erfindungsgemäßen Paneele einen Satz aus Bodenplatten mit allen Merkmalen des Anspruchs 1 des Gebrauchsmusters DE 20 2007 018 802 U1. Die in dieser Druckschrift beschriebenen Varianten und bevorzugten Ausführungsformen sind auch im Rahmen der vorliegenden Erfindung besonders bevorzugt.

Im Rahmen einer zweiten besonders bevorzugten Ausführungsform der vorliegenden Erfindung bilden die erfindungsgemäßen Paneele einen Satz aus Bodenplatten mit allen Merkmalen des Anspruchs 1 des Gebrauchsmusters DE 20 2007 018 804 U1. Die in dieser Druckschrift beschriebenen Varianten und bevorzugten Ausführungsformen sind auch im Rahmen der vorliegenden Erfindung besonders bevorzugt.

Im Rahmen einer dritten besonders bevorzugten Ausführungsform der vorliegenden Erfindung umfasst das erfindungsgemäße Paneel ein Klick-System (joint) mit allen Merkmalen des Anspruchs 1 der Patentanmeldung WO 2007/008139. Die in dieser Druckschrift beschriebenen Varianten und bevorzugten Ausführungsformen sind auch im Rahmen der vorliegenden Erfindung besonders bevorzugt.

## Patentansprüche

1. Rechteckigförmiges Paneel mit einer Oberseite und einer Unterseite sowie vier Längsseiten (1, 3, 5, 7), wobei
- die erste und die zweite Längsseite (1, 3) im rechten Winkel zueinander angeordnet sind,
- die erste und die dritte Längsseite (1, 5) parallel zueinander angeordnet sind und
- die zweite und die vierte Längsseite (3, 7) parallel zueinander angeordnet sind,
wobei
das Paneel auf der Unterseite mindestens eine Nut (11) aufweist, die von der ersten Längsseite (1) nach der dritten Längsseite (5) verläuft und eine erste Nutöffnung (13) in der ersten Längsseite (1) und eine zweite Nutöffnung (15) in der dritten Längsseite (5) aufweist,
wobei das Paneel mindestens eine Nutöffnung (15) in der dritten Längsseite (5) aufweist, deren Abstand (X₂) von der vierten Längsseite (7) verschieden ist von dem Abstand (X₁) mindestens einer Nutöffnung (13) in der ersten Längsseite (1) von der vierten Längsseite (7),
so dass
zwei identische Paneele (A, B) über die dritte Längsseite (5) des ersten Paneels (A) und die erste Längsseite (1 b) der zweiten Paneels (B) parallel versetzt miteinander verbunden werden können und dabei auf der Unterseite der Paneele (A, B) mindestens eine durchgehende Nut (11, 11b) aufweisen, die von der ersten Längsseite (1) des ersten Paneels (A) nach der dritten Längsseite (5b) des zweiten Paneels (B) verläuft,
wobei mindestens eine Längsseite (1, 3, 5, 7) des Paneels ein Klick-System aufweist, um das Paneel mit einem weiteren Paneel formschlüssig zu verbinden,
**dadurch gekennzeichnet, dass**
das Paneel einen Polyurethan-Schaumstoff-Träger und mindestens eine auf dem Träger haftende mehrschichtige Verbundplatte umfasst, wobei die mehrschichtige Verbundplatte
a) eine Kernschicht und
b) eine Dekorschicht umfasst.

2. Paneel nach Anspruch 1, **dadurch gekennzeichnet, dass**.das Klick-System derart ausgebildet ist, dass mehrere Paneele durch Anwinkeln oder Neigen der Paneele miteinander formschlüssig verbunden werden können.

3. Paneel nach Anspruch 1 oder 2, **dadurch gekennzeichnet, dass** das Paneel mindestens eine Nutöffnung (15) in der dritten Längsseite (5) aufweist, deren Abstand (X₂) von der vierten Längsseite (7) dem Abstand (X₁) mindestens einer Nutöffnung (13) in der ersten Längsseite (1) von der vierten Längsseite (7) plus 33 % der Gesamtlänge (L) der ersten Längsseite (1) entspricht.

4. Paneel nach mindestens einem der vorangehenden Ansprüche, **dadurch gekennzeichnet, dass** das Paneel mindestens eine Nutöffnung (15) in der dritten Längsseite (5) aufweist, deren Abstand (X₂) von der vierten Längsseite (7) dem Abstand (X₁) mindestens einer Nutöffnung (13) in der ersten Längsseite (1) von der vierten Längsseite (7) plus 50 % der Gesamtlänge (L) der ersten Längsseite (1) entspricht.

5. Paneel nach mindestens einem der vorangehenden Ansprüche, **dadurch gekennzeichnet, dass** das Paneel mindestens eine Nut (11) umfasst, bei welcher der Abstand (X₁) der ersten Nutöffnung (13) in der ersten Längsseite (1) von der vierten Längsseite (7) und der Abstand (X₂) der zweiten Nutöffnung (15) in der dritten Längsseite (5) von der vierten Längsseite (7) verschieden sind.

6. Paneel nach mindestens einem der vorangehenden Ansprüche, **dadurch gekennzeichnet, dass** das Paneel mindestens zwei Nuten (11, 11') umfasst, bei welchen die Abstände (X₁, X₁') der ersten Nutöffnung (13, 13') in der ersten Längsseite (1) von der vierten Längsseite (7) und die Abstände (X₂, X₂') der zweiten Nutöffnung (15, 15') in der dritten Längsseite (5) von der vierten Längsseite (7) gleich sind.

7. Paneel nach mindestens einem der vorangehenden Ansprüche, **dadurch gekennzeichnet, dass** die Nut (11) eine Breite im Bereich von 0,5 bis 2,0 cm aufweist.

8. Paneel nach mindestens einem der vorangehenden Ansprüche, **dadurch gekennzeichnet, dass** die Nut (11) eine Tiefe im Bereich von 10 bis 75 % der Gesamtdicke des Paneels aufweist.

9. Paneel nach mindestens einem der vorangehenden Ansprüche, **dadurch gekennzeichnet, dass** in der Nut (11) Öffnungen (17) in Richtung der Oberseite der Paneele vorgesehen sind, um Kabel, Rohre oder andere Leitungen für den Betrachter unsichtbar durch die Nut bis zu einer vorbestimmten Stelle zu führen und an dieser Stelle weiter zu verwenden.

10. Paneel nach mindestens einem der vorangehenden Ansprüche, **dadurch gekennzeichnet, dass** es Hartholz von Laubbäumen umfasst.

11. Paneel nach mindestens einem der vorangehenden Ansprüche, **dadurch gekennzeichnet, dass** es einen Träger und eine auf dem Träger haftende Verbundplatte umfasst.

12. Verband, umfassend mindestens zwei Paneele (A, B) nach mindestens einem der vorangehenden Ansprüche, die versetzt parallel angeordnet sind und die auf der Unterseite mindestens eine durchgehende Nut (11, 11 b) aufweisen, die von der ersten Längsseite (1) des ersten Paneels (A) nach der dritten Längsseite (5b) des zweiten Paneels (B) verläuft.

13. Verband nach Anspruch 12, weiterhin umfassend mindestens ein Führungsmittel, welches in der durchgehenden Nut (11, 11b) angeordnet ist und mit mindestens einem Kabel, Rohr oder mindestens einer anderen Leitung lösbar verbunden werden kann, um dieses durch die Nut (11, 11 b) zu führen.

14. Verband nach Anspruch 12 oder 13, weiterhin umfassend mindestens ein Kabel, Rohr oder mindestens eine andere Leitung, welches in der durchgehenden Nut (11, 11 b) angeordnet ist.

15. Verband nach Anspruch 14, **dadurch gekennzeichnet, dass** das Kabel, Rohr oder die andere Leitung durch mindestens eine Öffnung (17) in der Oberseite eines Paneels geführt wird und mit einem weiteren Gegenstand verbunden wird.

## Claims

1. A rectangular panel having a top side and an underside and four long sides (1, 3, 5, 7), wherein
- the first and second long sides (1, 3) are arranged at a right angle to each other,
- the first and third long sides (1, 5) are arranged parallel to each other, and
- the second and fourth long sides (3, 7) are arranged parallel to each other,
wherein
the panel has on the underside at least one groove (11), which runs from the first long side (1) to the third long side (5) and has a first groove opening (13) in the first long side (1) and a second groove opening (15) in the third long side (5),
wherein the panel has at least one groove opening (15) in the third long side (5), the distance (X₂) of which from the fourth long side (7) is different from the distance (X₁) of at least one groove opening (13) in the first long side (1) from the fourth long side (7),
so that
two identical panels (A, B) can be connected in parallel offset to each other by means of the third long side (5) of the first panel (A) and the first long side (1b) of the second panel (B) and then have at least one continuous groove (11, 11b) on the underside of the panels (A, B), said groove running from the first long side (1) of the first panel (A) to the third long side (5b) of the second panel (B),
wherein at least one long side (1, 3, 5, 7) of the panel has a click system to connect the panel to a further panel in a form-fitting manner,
**characterised in that**
the panel comprises a polyurethane foam carrier and at least one multi-layered composite board, which adheres to the carrier, wherein the multi-layered composite board comprises
a) a core layer and
b) a decorative layer.

2. The panel according to Claim 1,
**characterised in that**
the click system is formed such that a plurality of panels can be connected to each other in a form-fitting manner by angling or inclining the panels.

3. The panel according to Claim 1 or 2,
**characterised in that**
the panel has at least one groove opening (15) in the third long side (5), the distance (X₂) of which from the fourth long side (7) corresponds to the distance (X₁) of at least one groove opening (13) in the first long side (1) from the fourth long side (7) plus 33% of the total length (L) of the first long side (1).

4. The panel according to at least one of the preceding claims,
**characterised in that**
the panel has at least one groove opening (15) in the third long side (5), the distance (X₂) of which from the fourth long side (7) corresponds to the distance (X₁) of at least one groove opening (13) in the first long side (1) from the fourth long side (7) plus 50% of the total length (L) of the first long side (1).

5. The panel according to at least one of the preceding claims,
**characterised in that**
the panel comprises at least one groove (11), with which the distance (X₁) of the first groove opening (13) in the first long side (1) from the fourth long side (7) and the distance (X₂) of the second groove opening (15) in the third long side (5) from the fourth long side (7) are different.

6. The panel according to at least one of the preceding claims,
**characterised in that**
the panel comprises at least two grooves (11, 11'), with which the distances (X₁, X₁') of the first groove opening (13, 13') in the first long side (1) from the fourth long side (7) and the distances (X₂, X₂') of the second groove opening (15, 15') in the third long side (5) from the fourth long side (7) are equal.

7. The panel according to at least one of the preceding claims,
**characterised in that**
the groove (11) has a width in the range from 0.5 to 2.0 cm.

8. The panel according to at least one of the preceding claims,
**characterised in that**
the groove (11) has a depth in the range from 10 to 75% of the total thickness of the panel.

9. The panel according to at least one of the preceding claims,
**characterised in that**
openings (17) in the direction of the top side of the panels are provided in the groove (11) in order to guide cables, pipes or other lines in an invisible manner for the user through the groove to a predefined point and to use said cables, pipes or other lines further at this point.

10. The panel according to at least one of the preceding claims,
**characterised in that**
it comprises hard wood from deciduous trees.

11. The panel according to at least one of the preceding claims,
**characterised in that**
it comprises a carrier and a composite board adhering to the carrier.

12. A structure, comprising at least two panels (A, B) according to at least one of the preceding claims, which are arranged offset and parallel and which have on the underside at least one continuous groove (11, 11b), which runs from the first long side (1) of the first panel (A) to the third long side (5b) of the second panel (B).

13. The structure according to Claim 12, further comprising at least one guide means, which is arranged in the continuous groove (11, 11b) and can be connected detachably to at least one cable, pipe or other line in order to guide said cable, pipe or line through the groove (11, 11b).

14. The structure according to Claim 12 or 13, further comprising at least one cable, pipe or other line, which is arranged in the continuous groove (11, 11b).

15. The structure according to Claim 14,
**characterised in that**
the cable, pipe or other line is guided through at least one opening (17) in the top side of a panel and is connected to a further object.

## Revendications

1. Panneau rectangulaire avec une face supérieure et une face inférieure, ainsi que quatre côtés longitudinaux (1, 3, 5, 7), dans lequel
- le premier et le deuxième côté longitudinal (1, 3) sont agencés de manière à former un angle droit entre eux,
- le premier et le troisième côté longitudinal (1, 5) sont agencés parallèlement l'un à l'autre, et
- le deuxième et le quatrième côté longitudinal (3, 7) sont agencés parallèlement l'un à l'autre,
dans lequel
le panneau comporte au moins une rainure (11) dans la face inférieure, laquelle s'étend à partir du premier côté longitudinal (1) et au-delà du troisième côté longitudinal (5), ainsi qu'une première ouverture de rainure (13) dans le premier côté longitudinal (1) et une deuxième ouverture de rainure (15) dans le troisième côté longitudinal (5),
dans lequel le panneau comporte au moins une ouverture de rainure (15) dans le troisième côté longitudinal (5), dont l'écart (X₂) par rapport au quatrième côté longitudinal (7) est différent de l'écart (X₁) entre au moins une ouverture de rainure (13) dans le premier côté longitudinal (1) et le quatrième côté longitudinal (7),
de sorte que
deux panneaux identiques (A, B) peuvent être reliés entre eux, tout en étant décalés parallèlement l'un par rapport à l'autre, par le troisième côté longitudinal (5) du premier panneau (A) et le premier côté longitudinal (1b) du deuxième panneau (B), et comportent au moins une rainure continue (11, 11b) sur la face inférieure des panneaux (A, B), laquelle s'étend à partir du premier côté longitudinal (1) du premier panneau (A) et au-delà du troisième côté longitudinal (5b) du deuxième panneau (B),
dans lequel au moins un côté longitudinal (1, 3, 5, 7) du panneau comporte un système d'encliquetage permettant de relier le panneau à un autre panneau par complémentarité de forme,
**caractérisé en ce que**
le panneau comprend un support de mousse en polyuréthane et au moins une plaque composite multicouches adhérant sur le support, la plaque composite comprenant
a) une couche centrale et
b) une couche de décoration.

2. Panneau selon la revendication 1, **caractérisé en ce que** le système d'encliquetage est conçu de telle façon que plusieurs panneaux peuvent être reliés entre eux par complémentarité de forme, par enroulement ou inclinaison des panneaux.

3. Panneau selon la revendication 1 ou 2, **caractérisé en ce que** le panneau comporte au moins une ouverture de rainure (15) dans le troisième côté longitudinal (5), dont l'écart (X₂) par rapport au quatrième côté longitudinal (7) correspond à l'écart (X₁) entre au moins une ouverture de rainure (13) dans le premier côté longitudinal (1) et le quatrième côté longitudinal (7), plus 33% de la longueur totale (L) du premier côté longitudinal (1).

4. Panneau selon l'une au moins des revendications précédentes, **caractérisé en ce que** le panneau comporte au moins une ouverture de rainure (15) dans le troisième côté longitudinal (5), dont l'écart (X₂) par rapport au quatrième côté longitudinal (7) correspond à l'écart (X₁) entre au moins une ouverture de rainure (13) dans le premier côté longitudinal (1) et le quatrième côté longitudinal (7), plus 50% de la longueur totale (L) du premier côté longitudinal (1)

5. Panneau selon l'une au moins des revendications précédentes, **caractérisé en ce que** le panneau comprend au moins une rainure (11) dans laquelle l'écart (X₁) entre la première ouverture de rainure (13) dans le premier côté longitudinal (1) et le quatrième côté longitudinal (7) est différent de l'écart (X₂) entre la deuxième ouverture de rainure (15) dans le troisième côté longitudinal (5) et le quatrième côté longitudinal (7).

6. Panneau selon l'une au moins des revendications précédentes, **caractérisé en ce que** le panneau comprend au moins deux rainures (11, 11'), dans lesquelles l'écart (X₁, X₁') entre la première ouverture de rainure (13, 13') dans le premier côté longitudinal (1) et le quatrième côté longitudinal (7) sont identiques aux écarts (X₂, X₂') entre la deuxième ouverture de rainure (15, 15') dans le troisième côté longitudinal (5) et le quatrième côté longitudinal (7).

7. Panneau selon l'une au moins des revendications précédentes, **caractérisé en ce que** la rainure (11) présente une largeur comprise entre 0,5 et 2,0 cm.

8. Panneau selon l'une au moins des revendications précédentes, **caractérisé en ce que** la rainure (11) présente une profondeur comprise entre 10 et 75% de l'épaisseur totale du panneau.

9. Panneau selon l'une au moins des revendications précédentes, **caractérisé en ce que** des ouvertures (17) orientées vers la face supérieure du panneau sont prévues dans la rainure (11), pour guider des câbles, des conduits ou d'autres conduites de façon invisible pour l'utilisateur, à travers la rainure, jusqu'à un point prédéfini et les utiliser ultérieurement à cet endroit.

10. Panneau selon l'une au moins des revendications précédentes, **caractérisé en ce qu'**il comprend du bois dur venant de d'arbres feuillus.

11. Panneau selon l'une au moins des revendications précédentes, **caractérisé en ce qu'**il comprend un support et une plaque composite adhérant sur le support.

12. Assemblage comprenant au moins deux panneaux (A, B) selon l'une au moins des revendications précédentes, lesquels sont agencés de façon décalée parallèlement et comportent au moins une rainure continue (11, 11b) sur la face inférieure, laquelle s'étend à partir du premier côté longitudinal (1) du premier panneau (A) et au-delà du troisième côté longitudinal (5b) du deuxième panneau (B).

13. Assemblage selon la revendication 12, comprenant en outre au moins un moyen de guidage agencé dans la rainure continue (11, 11b) et apte à être relié de façon amovible à un câble, un conduit ou au moins une autre conduite, pour guider celui-ci à travers la rainure (11, 11b).

14. Assemblage selon la revendication 12 ou 13, comprenant en outre au moins un câble, un conduit ou au moins une autre conduite, lequel/laquelle est agencé(e) dans la rainure continue (11, 11b).

15. Assemblage selon la revendication 14, **caractérisé en ce que** le câble, le conduit ou l'autre conduite est guidé(e) à travers au moins une ouverture (17) dans la face supérieure d'un panneau et relié à un autre obj et.
